# EUROPEAN PATENT APPLICATION

(11) **EP 3 333 795 A1**
(43) Date of publication of application: **13.06.2018**
(21) Application number: 17205932.1
(22) Date of filing: 07.12.2017
(51) Int. Cl.: G06Q 30/06, G06Q 20/32, G06Q 20/34, G06Q 20/40

(54) **ELECTRONIC DEVICE AND CARD REGISTRATION METHOD THEREOF**

(30) Priority: 07.12.2016 KR 20160165792
(71) Applicant: Samsung Electronics Co., Ltd., Gyeonggi-do 16677 (KR)
(72) Inventor: Choi, Jin Wan, 13608 Seongnam-si (KR); Kim, Ho, 01913 Seoul (KR)
(74) Representative: Nederlandsch Octrooibureau

(57) **Abstract**

An electronic device and method are disclosed herein. The electronic device includes a communication module configured to communicate with an external device, a memory configured to store security information controlling registration of secured information, the security information indicating a plurality of data types, an input module, and a processor. The processor implements the method, including security information for storage in a memory, the security information indicating a plurality of data types, in response to detecting a user input by an input module, retrieving account information corresponding to a user account, and in response to detecting that data elements of the account information correspond to the plurality of data types in the security information, transmitting a request to register the user account on a first transactional server.

## Description

### PRIORITY

This application claims the priority of a Korean patent application filed on December 7, 2016 in the Korean Intellectual Property Office and assigned Serial number 10-2016-0165792, the entire disclosure of which is hereby incorporated by reference.

### BACKGROUND OF THE INVENTION

### 1. Field of the Invention

The present disclosure relates to an electronic device supporting a payment service and a card registration method thereof.

### 2. Background of the Invention

With the development of information technology (IT), high-performance electronic devices have been widely used, and these electronic devices may provide a variety of functions for users. Electronic devices may provide network-based communication services, such as a music streaming service, a video streaming service, a digital broadcasting service, a telephone call, wireless Internet, a short message service (SMS), a multimedia messaging service (MMS), and the like.

In recent years, a lot of attention has been paid to security for information technology, including any operation that involves the transfer of sensitive information on the part of a user or a consumer.

### SUMMARY OF THE INVENTION

One form of security involves security implementing in the context of a mobile payment service, a user registers a substantial amount of sensitive information (such as credit card information stored in a server operated by an issuing financial company). A variety of corporations that deal in secure information provide various forms of security for executing services through separate servers, such as mobile payments. Since an electronic device requests registration of sensitive information from the servers of the various companies (e.g., as in when registering a credit card), a user may experience inconvenience at the increased amount of time and complexity for completing the secure registration process.

Aspects of the present disclosure are to address at least the above-mentioned problems and/or disadvantages and to provide at least the advantages described below. Accordingly, an aspect of the present disclosure is to provide an electronic device and a security registration method thereof that are capable of reducing time utilized for security registration by preferentially requesting secured registration from a server to which the user information is being registered.

In accordance with an aspect of the present disclosure, an electronic device is disclosed, including a communication module configured to communicate with an external device, a memory configured to store security information controlling registration of secured information, the security information indicating a plurality of data types, an input module, and a processor. The processor executes in response to detecting a user input by the input module, retrieve account information corresponding to a user account, in response to detecting that data elements of the account information correspond to the plurality of data types in the security information, transmit a request to register the user account on a first transactional server.

In accordance with another aspect of the present disclosure, a method in an electronic device is disclosed, including receiving by a communication module security information for storage in a memory, the security information indicating a plurality of data types, in response to detecting a user input by an input module, retrieving account information corresponding to a user account, and in response to detecting that data elements of the account information correspond to the plurality of data types in the security information, transmitting a request to register the user account on a first transactional server.

In accordance with another aspect of the present disclosure, a non-transitory computer readable medium is disclosed, including instructions which, when executed by a processor, cause the processor to receive by a communication module security information for storage in a memory, the security information indicating a plurality of data types, in response to detecting a user input by an input module, retrieve account information corresponding to a user account, in response to detecting that data elements of the account information correspond to the plurality of data types in the security information, transmit a request to register the user account on a first transactional server.:

According to various embodiments of the present disclosure, by requesting card registration from payment servers according to specified priorities on the basis of card registration information, it is possible to reduce time utilized for the card registration and to enhance convenience of use.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a configuration of an secure system according to various embodiments of the present disclosure;
FIG. 2 is a signal flow diagram illustrating a method of managing secured information by an secure system according to various embodiments of the present disclosure;
FIG. 3 is a signal flow diagram illustrating a secure information method of an secure system according to various embodiments of the present disclosure;
FIG. 4 is a signal flow diagram illustrating a registration method of an secure payment system according to various embodiments of the present disclosure;
FIG. 5 illustrates a configuration of an secure information system according to various embodiments of the present disclosure;
FIG. 6 is a block diagram illustrating a configuration of an electronic device according to various embodiments of the present disclosure;
FIG. 7 is a flowchart illustrating a secure information registration method of an electronic device according to various embodiments of the present disclosure;
FIG. 8 illustrates an electronic device in a network environment according to various embodiments of the present disclosure;
FIG. 9 is a block diagram of an electronic device according to various embodiments of the present disclosure; and
FIG. 10 is a block diagram of a program module according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

Hereinafter, various embodiments of the present disclosure may be described with reference to accompanying drawings. Embodiments and terms used herein are not intended to limit the technologies described in the present disclosure to specific embodiments, and it should be understood that the embodiments and the terms include modification, equivalent, and/or alternative on the corresponding embodiments described herein. With regard to description of drawings, similar elements may be marked by similar reference numerals. The terms of a singular form may include plural forms unless otherwise specified. In the disclosure disclosed herein, the expressions "A or B", "at least one of A or/and B", and the like used herein may include any and all combinations of one or more of the associated listed items. Expressions such as "first," or "second," and the like, may express their elements regardless of their priority or importance and may be used to distinguish one element from another element but is not limited to these components. When an (e.g., first) element is referred to as being "(operatively or communicatively) coupled with/to" or "connected to" another (e.g., second) element, it may be directly coupled with/to or connected to the other element or an intervening element (e.g., a third element) may be present.

According to the situation, the expression "configured to" used herein may be interchangeably used as, for example, the expression "suitable for", "having the capacity to", "designed to", "adapted to", "made to", or "capable of". The expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

According to various embodiments of the present disclosure, an electronic device may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, medical devices, cameras, or wearable devices. A wearable device may include at least one of an accessory type of a device (e.g., a timepiece, a ring, a bracelet, an anklet, a necklace, glasses, a contact lens, or a head-mounted-device (HMD)), one-piece fabric or clothes type of a circuit (e.g., electronic clothes), a body-attached type of a circuit (e.g., a skin pad or a tattoo), or a bio-implantable type of a circuit. According to an embodiment, the electronic device may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, media boxes (e.g., Samsung HomeSync™, Apple TV™, or Google TV™), game consoles (e.g., Xbox™ or PlayStation™), electronic dictionaries, electronic keys, camcorders, electronic picture frames, or the like.

According to another embodiment, the electronic devices may include at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices), navigation devices, global navigation satellite system (GNSS), event data recorders (EDRs), flight data recorders (FDRs), vehicle infotainment devices, electronic equipment for vessels (e.g., navigation systems, gyrocompasses, and the like), avionics, security devices, head units for vehicles, industrial or home robots, drones, automatic teller's machines (ATMs), points of sales (POSs), or internet of things (e.g., light bulbs, various sensors, sprinkler devices, fire alarms, thermostats, street lamps, toasters, exercise equipment, hot water tanks, heaters, boilers, and the like). According to another embodiment, the electronic devices may include at least one of parts of furniture, buildings/structures, or vehicles, electronic boards, electronic signature receiving devices, projectors, or various measuring instruments (e.g., water meters, electricity meters, gas meters, or wave meters, and the like). According to various embodiments, an electronic device may be a flexible electronic device or may be a combination of two or more of the above-described devices. An electronic device according to an embodiment of the present disclosure may not be limited to the above-described electronic devices. The term "user" used herein may refer to a person who uses an electronic device or may refer to a device (e.g., an artificial intelligence electronic device) that uses an electronic device.

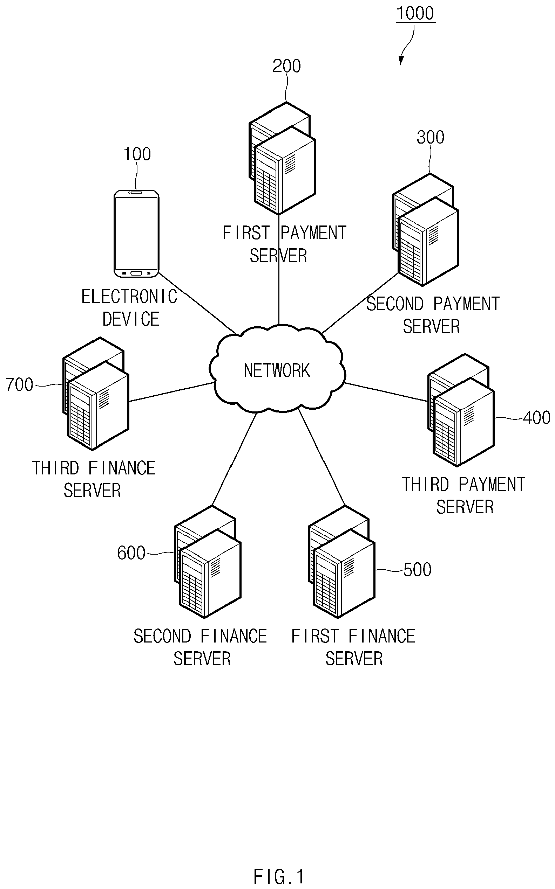

FIG. 1 illustrates a configuration of a secure information system according to various embodiments of the present disclosure.

Referring to FIG. 1, a secure information system may in some examples refer to executing secure information transfers for facilitating consumer payments, and thus be called an "electronic payment" system 1000, although it is recognized the present invention is not limited to electronic payments but rather encompasses any form of secure information transfer. The system may include an electronic device 100. The secure information system may further include a first server 200, a second server 300, a third server 400 for executing information transactions (e.g., payments, and may in this example be referred to as "payment servers"). The secure information system may further include a first server 500, a second server 600, and a third server 700 for storing information used to execute the information transactions (e.g., financial information, which in this example may be referred to as "finance servers").

The elements included in the electronic payment system 1000 illustrated in FIG. 1 may be connected together through a network. For example, the electronic device 100, the first payment server 200, the second payment server 300, the third payment server 400, the first finance server 500, the second finance server 600, and the third finance server 700 may be connected together through a mobile communication network or an Internet network.

The electronic device 100 may be a user device used by a user that wants to register secured information (e.g., a card in a payment server or a finance server according to various embodiments). The user may register a card by using the electronic device 100 and may make a payment (or deposit/withdrawal) on/off-line by using the registered card. According to an embodiment, the electronic device 100 may manage payment-service-related information (e.g., a user account such as a Samsung account), user authentication information, financial information (e.g., card information or account information) interlocked with the user account, a payment token, and the like).

According to an embodiment, the electronic device 100 may store security information indicating what information should be provided to register secure information related to a particular user account. For example, the security information may, in the case of electronic transactions, include information required to register user accounts. In some cases, the user accounts correspond to credit card accounts, and thus the card management information received from the first payment server 200 may include, for example, identification information for a financial company and a bank identification number (BIN) range managed by the financial company. The card management information may further include, for example, an indication as to whether to provide a global service, a country, and condition information utilized for card registration. The condition information utilized for card registration may include, for example, the number of digits in a card number (PAN length), whether a card validation code (CVC or CVV) is utilized, and whether an address is utilized.

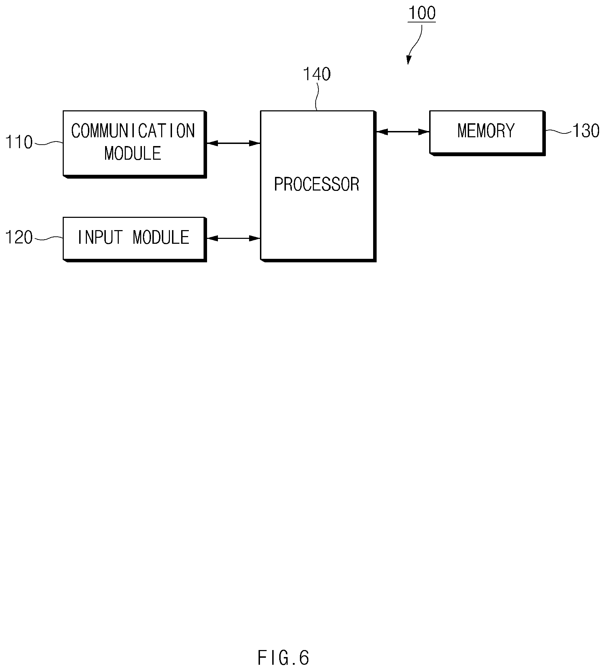

According to an embodiment, the electronic device 100 may register an account to a secure server in order to facilitate related data transactions related to the account. For example, following some embodiments described below, a credit card account in a finance server may facilitate provision of electronic payment services. According to an embodiment, the electronic device 100 may obtain user account information for use as card registration information from the user. The account information in this example may include, for example, a card number. The card registration information may further include other relevant data. For example, in the case of a credit card account, account information used for registration may include a user's name and address, a card validation code, and card expiration date. Various methods of obtaining card registration information by the electronic device 100 will be described below with reference to FIG. 6. It is understood that the present invention is not limited to electronic financial transactions but can be utilized with respect to registration of any account utilizing secure information.

According to an embodiment, the electronic device 100 may request card registration from the plurality of payment servers 200, 300, and 400 according to specified priorities. For example, if card registration information is obtained, the electronic device 100 may identify card management information corresponding to the card registration information. If card management information corresponding to the card registration information is identified, the electronic device 100 may request card registration from the first payment server 200. If card management information corresponding to the card registration information is not identified, the electronic device 100 may request card registration from the second payment server 300. If the electronic device 100 fails in the card registration through the second payment server 300, the electronic device 100 may request card registration from the third payment server 400.

According to an embodiment, the electronic device 100 may provide a payment service to the user by using a payment application (e.g., Samsung Pay™ Application). According to an embodiment, the payment application may provide a payment-related user interface. For example, the payment application may provide a user interface relating to card registration, payment, or transaction. Furthermore, the payment application may provide, for example, an interface relating to user authentication through identification and verification (ID&V).

According to an embodiment, the plurality of payment servers 200, 300, and 400 may manage payment-service-related information (e.g., a user account (e.g., Samsung account), user authentication information, financial information (e.g., card information or account information) interlocked with the user account, and the like) and may transmit and receive the payment-service-related information between the electronic device 100 and the plurality of finance servers 500, 600, and 700.

According to an embodiment, the first payment server 200 may store card management information received from the first finance server 500. According to an embodiment, the first payment server 200 may transmit, to the electronic device 100, the card management information received from the first finance server 500.

According to an embodiment, the plurality of finance servers 500, 600, and 700 may be servers operated in card companies or banks. According to an embodiment, the plurality of finance servers 500, 600, and 700 may issue cards and may manage financial information. According to an embodiment, if card registration is requested, the plurality of finance servers 500, 600, and 700 may finally determine whether to approve the card registration on the basis of financial information. According to an embodiment, the plurality of finance servers 500, 600, and 700 may manage card management information.

According to an embodiment, the plurality of finance servers 500, 600, and 700 may generate a payment token. For example, if payment (or deposit/withdrawal) is requested by the plurality of payment servers 200, 300, and 400, or if card registration is completed, the plurality of finance servers 500, 600, and 700 may generate a payment token and may transmit the payment token to the plurality of payment servers 200, 300, and 400.

According to an embodiment, the plurality of finance servers 500, 600, and 700 may be classified into a first group, a second group, and a third group according to service areas and service characteristics. According to an embodiment, a finance server included in the first group may be a local finance server that provides card management information to a payment server (e.g., the first payment server 200), a finance server included in the second group may be a local finance server that does not provide card management information to a payment server (e.g., the first payment server 200), and a finance server included in the third group may be a global finance server. According to an embodiment, the first finance server 500 may be a finance server included in the first group, the second finance server 600 may be a finance server included in the second group, and the third finance server 700 may be a finance server included in the third group.

According to an embodiment, the first payment server 200 may provide a payment service in conjunction with a finance server (e.g., the first finance server 500) included in the first group, the second payment server 300 may provide a payment service in conjunction with a finance server (e.g., the second finance server 600) included in the second group, and the third payment server 400 may provide a payment service in conjunction with a finance server (e.g., the third finance server 700) included in the third group. That is, each transactional server is communicatively coupled with each of a number of account servers.

In the embodiment described with reference to FIG. 1, the plurality of payment servers 200, 300, and 400 have been described as separate servers. However, the plurality of payment servers 200, 300, and 400 may be implemented with a single server. For example, the plurality of payment servers 200, 300, and 400 may be functionally separated from one another in a single server to provide a payment service. In the embodiment described with reference to FIG. 1, the first payment server 200 has been described as managing card management information. However, the electronic payment system 1000 may include a separate database server connected with the first payment server 200 to manage card management information.

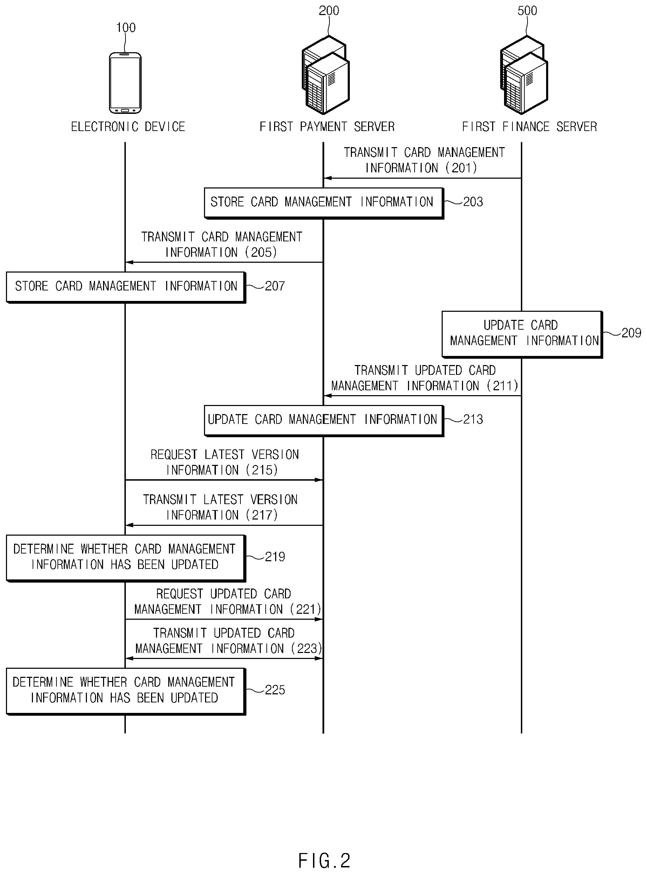

FIG. 2 is a signal flow diagram illustrating a method of managing secure management information by a secure electronic system according to various embodiments of the present disclosure.

According to an embodiment, as in the example above, the secure information may in some embodiments relate to secure consumer financial information utilized for executing digital transactions. Accordingly, the disclosure will continue with this example, although it is understood the invention is not limited to such transactions. In operation 201, the first finance server 500 may transmit secure information, such as card management information to the first payment server 200.

According to an embodiment, in operation 203, the first payment server 200 may store the card management information received from the first finance server 500. In the case where the first payment server 200 operates in conjunction with a plurality of first finance servers 500, the first payment server 200 may store a plurality of data elements within the card management information received from the plurality of first finance servers 500.

According to an embodiment, in operation 205, the first payment server 200 may transmit the card management information to the electronic device 100. According to an embodiment, the first payment server 200 may transmit the card management information through a payment application installed in the electronic device 100. For example, if the electronic device 100 having the payment application installed therein requests transmission of card management information, the first payment server 200 may transmit card management information to the electronic device 100.

According to an embodiment, in operation 207, the electronic device 100 may store the card management information received from the first payment server 200.

According to an embodiment, in operation 209, the first finance server 500 may update the card management information. For example, the first finance server 500 may change part of the card management information or may add new information to the card management information depending on a payment service operating policy.

According to an embodiment, in operation 211, the first finance server 500 may transmit the updated card management information to the first payment server 200.

According to an embodiment, in operation 213, the first payment server 200 may update the card management information using the updated card management information. For example, the first payment server 200 may replace the stored card management information with the updated card management information.

According to an embodiment, in operation 215, the electronic device 100 may request the latest version information of the card management information from the first payment server 200.

According to an embodiment, in operation 217, the first payment server 200 may transmit the latest version information of the card management information to the electronic device 100.

According to an embodiment, in operation 219, the electronic device 100 may determine whether the card management information is updated, using the latest version information received from the first payment server 200. For example, the electronic device 100 may compare the latest version information and version information of the card management information stored in a memory to determine whether the card management information has been updated.

The operation of determining whether the card management information has been updated may be periodically or aperiodically performed. For example, the electronic device 100 may request the latest version information from the first payment server 200 every specified period (e.g., every day or every week) to determine whether the card management information has been updated. In another example, the electronic device 100 may request the latest version information from the first payment server 200 according to a user input to determine whether the card management information has been updated.

According to an embodiment, in operation 221, the electronic device 100 may request the updated card management information from the first payment server 200 if it is determined that the card management information has been updated.

According to an embodiment, in operation 223, the first payment server 200 may transmit the updated card management information to the electronic device 100.

According to an embodiment, in operation 225, the electronic device 100 may update the card management information by using the updated card management information. For example, the electronic device 100 may replace the stored card management information with the updated card management information.

In the embodiment described with reference to FIG. 2, the first payment server 200 has been described as transmitting the updated card management information to the electronic device 100 in response to a request of the electronic device 100. However, the first payment server 200 may transmit the updated card management information to the electronic device 100 even without a request of the electronic device 100 if the updated card management information is received from the first finance server 500.

According to the embodiment described with reference to FIG. 2, the electronic device 100 and the first payment server 200 may periodically or aperiodically update the card management information and may store the latest version of the card management information.

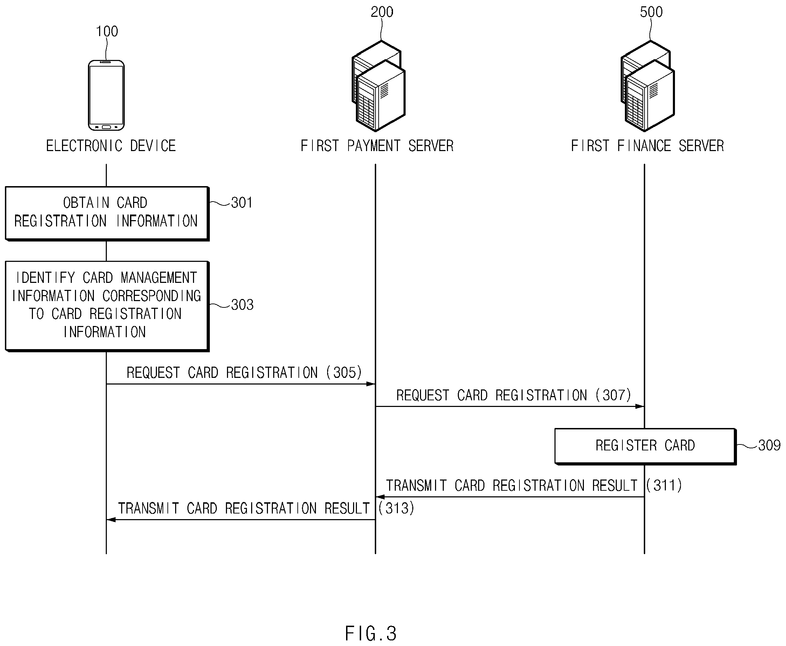

FIG. 3 is a signal flow diagram illustrating a secure information registration method of a secure electronic system according to various embodiments of the present disclosure.

According to an embodiment, as in the above descriptions, the example may continue to refer to an electronic payment system as a common form of information system requiring secure transactions. Referring then to FIG. 3, in operation 301, the electronic device 100 may obtain card registration information.

According to an embodiment, in operation 303, the electronic device 100 may identify card management information corresponding to the card registration information. For example, the electronic device 100 may determine whether a BIN corresponding to a card number included in the card registration information exists.

According to an embodiment, if card management information corresponding to the card registration information exists, the electronic device 100 may, in operation 305, request card registration from the first payment server 200. According to an embodiment, the electronic device 100 may request card registration destined for a finance server (e.g., the first finance server 500) corresponding to the card registration information among a plurality of finance servers operating in conjunction with the first payment server 200. According to an embodiment, the electronic device 100 may transmit the card registration information together with the card registration request.

According to an embodiment, in operation 307, the first payment server 200 may request card registration from the first finance server 500. For example, the first payment server 200 may identify a destination for the card registration request received from the electronic device 100 and may request card registration from the first finance server 500 that corresponds to the identified destination.

In the above-described embodiment, the electronic device 100 has been described as requesting card registration from the finance server corresponding to the card registration information via the first payment server 200. However, according to another embodiment, the electronic device 100 may directly request card registration from the finance server corresponding to the card registration information without the first payment server 200.

According to an embodiment, in operation 309, the first finance server 500 may register a card. For example, the first finance server 500 may register a using the card registration information included in the card registration request. According to an embodiment, the first finance server 500 may generate a payment token if card registration is successful.

According to an embodiment, in operation 311, the first finance server 500 may transmit a card registration result to the first payment server 200. For example, if the card registration is completed, the first finance server 500 may transmit information that the card registration has been completed. In another example, card registration fails, the first finance server 500 may transmit information that the card registration has failed.

According to an embodiment, the first finance server 500 may generate a payment token if succeeding in the card registration and may transmit the payment token together with the card registration result to the first payment server 200.

According to an embodiment, in operation 313, the first payment server 200 may transmit the card registration result to the electronic device 100. According to an embodiment, if the card registration result is received, the electronic device 100 may inform a user of the card registration result, for example, through a display or a speaker. According to an embodiment, in the case where the first payment server 200 receives the payment token from the first finance server 500, the first payment server 200 may transmit the payment token together with the card registration result to the electronic device 100.

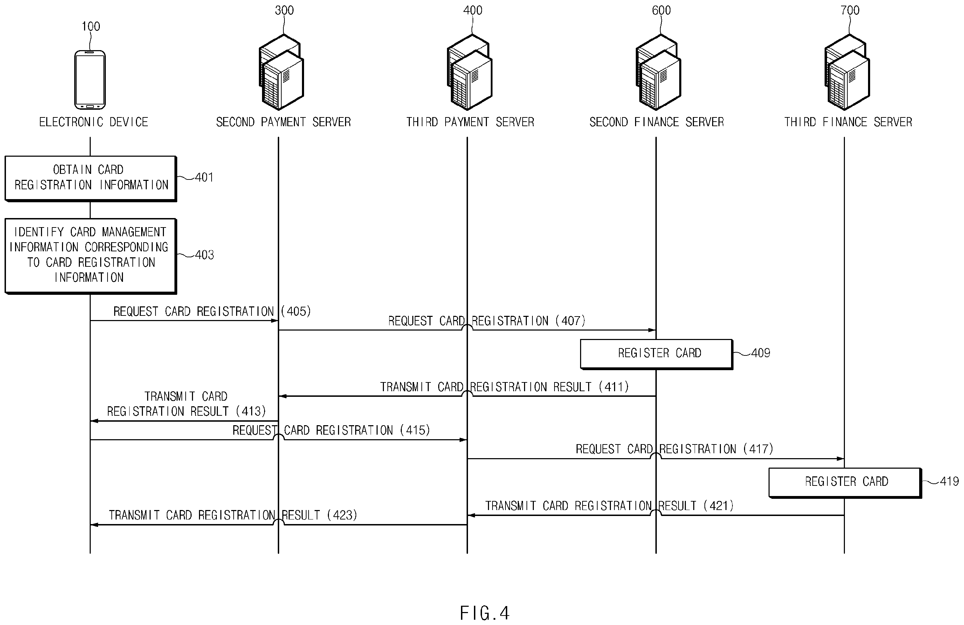

FIG. 4 is a signal flow diagram illustrating a secure information registration method of a secure electronic system according to various embodiments of the present disclosure.

According to an embodiment, as in the above descriptions, the example of a secure electronic payment system will continue to be used, although the invention is not limited to this embodiment. Referring to FIG. 4, in operation 401, the electronic device 100 may obtain card registration information.

According to an embodiment, in operation 403, the electronic device 100 may identify card management information corresponding to the card registration information. For example, the electronic device 100 may determine whether a BIN corresponding to a card number included in the card registration information exists. In the case where a card to be registered is associated with the second finance server 600 or the third finance server 700, card management information corresponding to the card registration information may not exist.

According to an embodiment, if card management information corresponding to the card registration information is not identified, the electronic device 100 may, in operation 405, request card registration from the second payment server 300. For example, if card management information corresponding to the card registration information is not identified, the electronic device 100 may request card registration from the second payment server 300 in preference to the third payment server 400. According to an embodiment, the electronic device 100 may transmit the card registration information together with the card registration request.

According to an embodiment, in operation 407, the second payment server 300 may request card registration from the second finance server 600.

According to an embodiment, in operation 409, the second finance server 600 may register a card. For example, the second finance server 600 may register a card on the basis of the card registration information included in the card registration request.

According to an embodiment, in operation 411, the second finance server 600 may transmit a card registration result to the second payment server 300. For example, if the card registration is completed, the second finance server 600 may transmit information that the card registration has been completed. In another example, in the case where there is an error in the card registration information or some of the card registration information utilized for card registration is omitted, the second finance server 600 may transmit information that the card registration has failed.

According to an embodiment, in operation 413, the second payment server 300 may transmit the card registration result to the electronic device 100. According to an embodiment, the second payment server 300 may sequentially request card registration from a plurality of finance servers operating in conjunction with the second payment server 300. For example, if failing to register a card in the second finance server 600, the second payment server 300 may request card registration from another finance server operating in conjunction with the second payment server 300. According to an embodiment, if information that the card registration has failed is received from all the finance servers operating in conjunction with the second payment server 300, the second payment server 300 may transmit, to the electronic device 100, the information that the card registration has failed.

According to an embodiment, if information that the card registration has failed is received from the second payment server 300, the electronic device 100 may, in operation 415, request card registration from the third payment server 400. According to an embodiment, the electronic device 100 may request card registration destined for a finance server corresponding to the card registration information among a plurality of finance servers operating in conjunction with the third payment server 400. According to an embodiment, the electronic device 100 may identify a finance server corresponding to the card registration information by using the card number included in the card registration information. For example, the electronic device 100 may identify a finance server corresponding to the card registration information by using the first digit of the card number or the first and second digits of the card number. According to an embodiment, the electronic device 100 may transmit the card registration information together with the card registration request.

According to an embodiment, in operation 417, the third payment server 400 may request card registration from the third finance server 700.

According to an embodiment, in operation 419, the third finance server 700 may register a card. For example, the third finance server 700 may register a card on the basis of the card registration information included in the card registration request.

According to an embodiment, in operation 421, the third finance server 700 may transmit a card registration result to the third payment server 400. For example, if the card registration is completed, the third finance server 700 may transmit information that the card registration has been completed. In another example, in the case where there is an error in the card registration information or some of the card registration information utilized for card registration is omitted, the third finance server 700 may transmit information that the card registration has failed.

According to an embodiment, in operation 423, the third payment server 400 may transmit the card registration result to the electronic device 100. According to an embodiment, if the card registration result is received, the electronic device 100 may inform a user of the card registration result, for example, through a display or a speaker.

According to the embodiment described with reference to FIG. 4, the electronic device 100 has been described as requesting the card registration from the second or third finance server 600 or 700 via the second or third payment server 300 or 400. However, according to another embodiment, the electronic device 100 may directly request card registration from the second or third finance server 600 or 700 without the second or third payment server 300 or 400.

According to the embodiment described with reference to FIG. 4, the electronic device 100 has been described as preferentially requesting card registration from the second payment server 300 if a payment server corresponding to the card registration information is not identified. However, the electronic device 100 may preferentially request card registration from the third payment server 400.

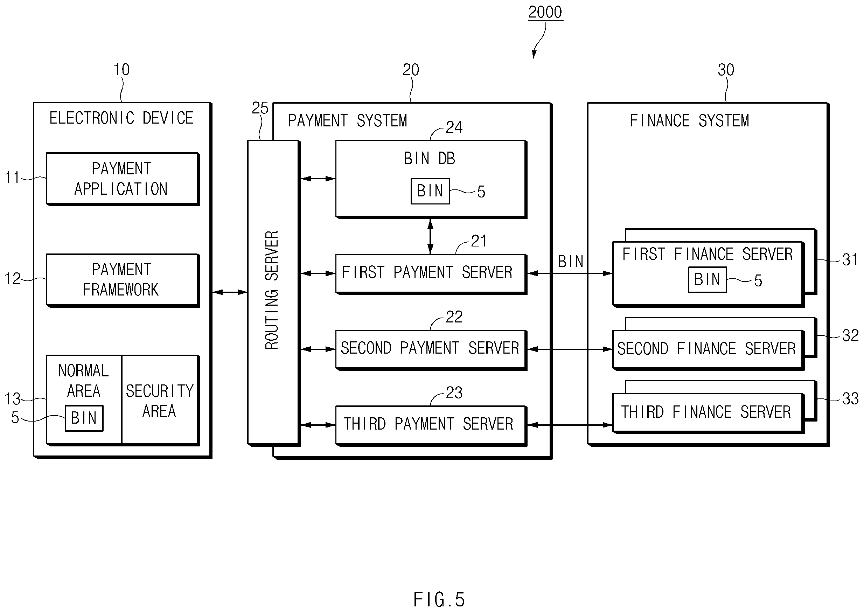

FIG. 5 illustrates a configuration of a secure electronic system, such as the example electronic payment system described above, according to various embodiments of the present disclosure.

Referring to FIG. 5, an electronic payment system 2000 may include an electronic device 10, a payment system 20, and a finance system 30.

According to an embodiment, the electronic device 10 may include a payment application 11, a payment framework 12, and a memory 13.

According to an embodiment, the payment application 11 may provide a user interface relating to payment and may perform card registration and electronic payment. The payment application 11 may store payment-service-related information in the memory 13. According to an embodiment, the payment framework 12 may provide functions utilized for card registration and electronic payment to the payment application 11.

According to an embodiment, the memory 13 may store payment-service-related information (e.g., a user account (e.g., Samsung account), user authentication information, financial information (e.g., card information or account information) interlocked with the user account, a payment token, and the like). According to an embodiment, the memory 13 may include a normal area and a security area (or a "secure" area). The normal area and the security area may be separate memory components (e.g., separate memory modules, units or components), or may be functionally-separated areas in a single memory component (e.g., separate partitions). According to an embodiment, among the information stored in the memory 13, relatively high security information may be stored in the security area (e.g., an embedded secure element or "eSE", an embedded subscriber identity module "eSIM", or a trust zone) accessible in a trusted execution environment (TEE), and relatively low security information may be stored in the normal area accessible in a rich execution environment (REE). For example, a payment token or user authentication information may be stored in the security area, and bank identification number (BIN) information 5 may be stored in the normal area.

According to an embodiment, the payment system 20 may include a plurality of payment servers 21, 22, and 23, a bank identification number database (BIN DB) 24, and a routing server 25.

According to an embodiment, the plurality of payment servers 21, 22, and 23 may manage payment-service-related information (e.g., a user account such as a Samsung account), user authentication information, financial information (e.g., card information or account information) interlocked with the user account, and the like) and may transmit and receive the payment-service-related information between the electronic device 10 and a plurality of finance servers 31, 32, and 33. According to an embodiment, the first payment server 21 may receive the BIN information 5 from at least one (e.g., a plurality of) first finance server(s) 31 and may transmit the BIN information 5 to the BIN DB 24.

According to an embodiment, the BIN DB 24 may store and manage the BIN information 5 received from the first payment server 21. According to an embodiment, if the new BIN information 5 is received from the first finance server 31 through the first payment server 21, the BIN DB 24 may update the stored BIN information 5.

According to an embodiment, if the electronic device 10 requests transmission of data, the routing server 25 may configure a transmission path for the requested information. For example, if card registration is requested by the electronic device 10, the routing server 25 may transmit the card registration request to one of the first to third payment servers 21, 22, and 23 through the configured transmission path.

According to an embodiment, the finance system 30 may include the plurality of finance servers 31, 32, and 33. According to an embodiment, the plurality of finance servers 31, 32, and 33 may be servers operated by or otherwise representing card companies or banks. According to an embodiment, the plurality of finance servers 31, 32, and 33 may issue cards and may manage financial information. According to an embodiment, the plurality of finance servers 31, 32, and 33 may manage card management information.

According to an embodiment, the first finance server 31 alone, among the plurality of finance servers 31, 32, and 33, may provide the BIN information 5 to the first payment server 21. For example, a card company or a bank that manages the first finance server 31 may provide BIN information to the first payment server 21 through consultation with a payment company that operates the payment system 20.

According to various embodiments of the present disclosure, the BIN information 5 managed by the first finance server 31 may be provided to, and managed by, the electronic device 10 as well as the BIN DB 24. Accordingly, the electronic device 10 may request card registration from the plurality of payment servers 21, 22, and 23 according to specified priorities by using the BIN information 5.

FIG. 6 is a block diagram illustrating a configuration of an electronic device according to various embodiments of the present disclosure.

Referring to FIG. 6, the electronic device 100 may include a communication module 110, an input module 120, a memory 130, and a processor 140.

According to an embodiment, the communication module (or communication circuit) 110 may communicate with payment servers (e.g., the first payment server 200, the second payment server 300, and the third payment server 400). According to an embodiment, the communication module 110 may transmit and receive information through a network (e.g., a mobile communication network or an Internet network). According to an embodiment, the communication module 110 may include at least one of a cellular module, wireless-fidelity (Wi-Fi) module, a Bluetooth module, a near field communication (NFC) module, a magnetic secure transmission (MST) module, and a global navigation satellite system (GNSS) module.

According to an embodiment, the input module (or input circuit) 120 may receive a user input. According to an embodiment, the input module 120 may include a touch sensor panel that senses a user's touch operation or a pen sensor panel that senses the user's pen operation. According to an embodiment, the input module 120 may sense a user operation input within a specific distance from a panel (e.g., the touch sensor panel or the pen sensor panel) without direct contact with the panel, as well as a user operation making direct contact with the panel. According to an embodiment, the input module 120 may include a gesture sensor (e.g., a motion recognition sensor) that recognizes the user's motion or a speech recognition sensor that recognizes the user's speech. According to an embodiment, the input module 120 may include a character recognition sensor. For example, the character recognition sensor may include a camera that takes an image and a character recognition module (e.g., an optical character reader (OCR)) that recognizes characters included in an image taken by the camera.

According to an embodiment, the input module 120 may obtain card registration information. For example, the user may enter card registration information through the touch sensor panel. In another example, the character recognition module may obtain card registration information by recognizing characters included in a card image taken by the user.

According to an embodiment, the memory 130 may store payment-service-related information (e.g., a user account (e.g., Samsung account), user authentication information, financial information (e.g., card information or account information) interlocked with the user account, a payment token, and the like).

According to an embodiment, among the information stored in the memory 130, high security information (e.g., a payment token or user authentication information) may be stored in a security area (e.g., an embedded secure element (eSE), an embedded subscriber identity module (eSIM), or a trust zone) accessible in a trusted execution environment (TEE).

According to an embodiment, the electronic device 100 may store card management information received from the first payment server 200. Table 1 below shows an example of the card management information stored in the memory 130.

**[Table 1]**

| BIN range | | bank information | | | condition | | |
|---|---|---|---|---|---|---|---|
| from | to | bank | co-branded | country | PAN length | CVC | address |
| 435211 | 435299 | bank 1 | N | CA | 19 | Y | Y |
| 553141 | 553150 | bank 2 | Y | BR | 16 | Y | N |
| ... | ... | ... | ... | ... | ... | ... | ... |

Referring to Table 1, the card management information may be stored in a table format. According to an embodiment, the card management information may include identification information (bank) for a financial company, a bank identification number range (BIN range) managed by the financial company, whether to provide a global service (co-branded), a country (country), and condition information utilized for card registration. The condition information utilized for card registration may include, for example, the number of digits in a card number (PAN length), whether a card validation code (CVC or CVV) is utilized, and whether an address is utilized.

According to an embodiment, the processor 140 may control an overall operation of the electronic device 100. For example, the processor 140 may control the communication module 110, the input module 120, and the memory 130 to register a card through a payment server according to various embodiments of the present disclosure.

According to an embodiment, the electronic device 100 may include at least one processor 140. For example, the electronic device 100 may a plurality of processors 140 capable of performing at least one function. According to an embodiment, the processor 140 may be implemented with a system on chip (SoC) that includes a central processing unit (CPU), a graphic processing unit (GPU), a memory, and the like.

According to an embodiment, the processor 140 may receive card management information from the first payment server 200 through the communication module 110. According to an embodiment, the processor 140 may store the received card management information in the memory 130. According to an embodiment, in the case where card management information is stored in a database server separate from the first payment server 200, the processor 140 may receive card management information from the database server having card management information stored therein.

According to an embodiment, the processor 140 may update the card management information stored in the memory 130. According to an embodiment, the processor 140 may request the latest version information of the card management information from the first payment server 200. According to an embodiment, the processor 140 may determine whether the card management information has been updated, based on the latest version information received from the first payment server 200. For example, the processor 140 may compare the latest version information with version information of the card management information stored in the memory 130. If the latest version information differs from the version of the card management information stored in the memory 130, the processor 140 may determine that the card management information has been updated. According to an embodiment, if the card management information is updated, the processor 140 may request the updated card management information from the first payment server 200. According to an embodiment, if the updated card management information is received, the processor 140 may store the updated card management information in the memory 130.

According to an embodiment, if card registration information is obtained through the input module 120, the processor 140 may determine whether all of the information utilized for card registration has been obtained, based on the card management information stored in the memory 130. For example, the processor 140 may compare a card number included in the card registration information and a BIN range included in the card management information to verify information utilized for card registration. According to an embodiment, if all of information utilized for card registration is not obtained, the processor 140 may additionally request utilized information from the user. For example, the processor 140 may display, on a display (not illustrated), a user interface for requesting the utilized information.

According to an embodiment, if card registration information is obtained through the input module 120, the processor 140 may register a card by using the card registration information. According to an embodiment, the processor 140 may request card registration from the plurality of payment servers 200, 300, and 400 according to specified priorities on the basis of the card registration information. According to an embodiment, if the card registration information is obtained through the input module 120, the processor 140 may identify card management information corresponding to the card registration information. For example, the electronic device 100 may determine whether a BIN corresponding to a card number included in the card registration information exists.

According to an embodiment, if card management information corresponding to the card registration information exists, the processor 140 may request card registration from the first payment server 200 (or the second finance server 500). According to an embodiment, if card management information corresponding to the card registration information exists, the processor 140 may identify a finance server corresponding to the card registration information. For example, the processor 140 may identify financial company identification information corresponding to the card management information. According to an embodiment, the processor 140 may request card registration destined for a finance server (e.g., the first finance server 500) corresponding to the card registration information among a plurality of finance servers operating in conjunction with the first payment server 200. According to an embodiment, the processor 140 may transmit the card registration information together with the card registration request.

According to an embodiment, the processor 140 may receive a card registration result from the first payment server 200 (or the first finance server 500). For example, if card registration is completed, the processor 140 may receive information that the card registration has been completed. In another example, if card registration fails, the processor 140 may receive information that the card registration has failed. According to an embodiment, if the card registration result is received from the first payment server 200, the processor 140 may inform the user of the card registration result. For example, the processor 140 may display, on the display (not illustrated), a user interface for informing of the card registration result.

According to an embodiment, if a payment server corresponding to the card registration information is not identified, the processor 140 may request card registration from the second payment server 300 (or the second finance server 600). According to an embodiment, the electronic device 100 may transmit the card registration information together with the card registration request. According to an embodiment, the processor 140 may receive a card registration result from the second payment server 300. For example, if the card registration is completed, the processor 140 may receive information that the card registration has been completed. In another example, if the card registration fails, the processor 140 may receive information that the card registration has failed.

According to an embodiment, if information that card registration has failed is received from the second payment server 300 (or the second finance server 600), the processor 140 may request card registration from the third payment server 400 (or the third finance server 700). According to an embodiment, the electronic device 100 may request card registration destined for a finance server corresponding to the card registration information among a plurality of finance servers operating in conjunction with the third payment server 400. For example, the electronic device 100 may identify a finance server corresponding to the card registration information by using the first digit of a card number or the first and second digits of the card number. For example, the processor 140 may determine that a card company is VISA Card Company if the first digit of a card number is "4", AMEX Card Company if the first and second digits of a card number are "34" or "37", or MASTER Card Company if the first and second digits of a card number are "51" to "55". According to an embodiment, the processor 140 may transmit the card registration information together with the card registration request. According to an embodiment, the processor 140 may receive a card registration result from the third payment server 400 (or the third finance server 700). For example, if the card registration is completed, the processor 140 may receive information that the card registration has been completed. In another example, if the card registration fails, the processor 140 may receive information that the card registration has failed.

According to an embodiment, if a card registration result is received from the second or third payment server 300 or 400, the processor 140 may inform the user of the card registration result. For example, the processor 140 may display, on the display (not illustrated), a user interface for informing of the card registration result.

According to an embodiment, if card registration is completed through the first or second payment server 200 or 300, the processor 140 may determine whether the registered card provides a global service. For example, the processor 140 may determine whether the registered card provides a global service, by using information as to whether to provide a global service, the information being included in card management information. In another example, the processor 140 may determine whether the registered card provides a global service, by using the first digit of a card number included in the card registration information.

According to an embodiment, if a card to be registered provides a global service, the processor 140 may request card registration from the third payment server 400. According to an embodiment, the electronic device 100 may request card registration destined for a finance server corresponding to the card registration information among a plurality of finance servers operating in conjunction with the third payment server 400.

According to various embodiments of the present disclosure, the processor 140 may request card registration from payment servers according to specified priorities on the basis of the card registration information. For example, the processor 140 may request card registration in the sequence of a local finance server (the first finance server) that provides card management information, a local finance server (the second finance server) that does not provide card management information, and a global finance server (the third finance server). Accordingly, it is possible to reduce time utilized for card registration and to enhance user convenience.

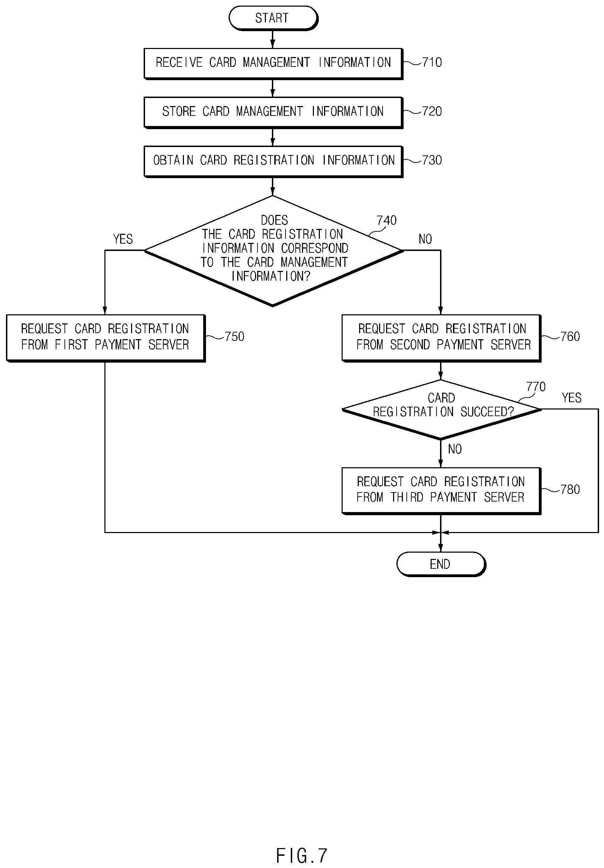

FIG. 7 is a flowchart illustrating a secure information registration method of an electronic device according to various embodiments of the present disclosure.

The flowchart illustrated in FIG. 7 may be configured with operations processed in the electronic device 100 illustrated in FIGS. 1 to 6. Accordingly, although omitted in the following description, the contents set forth in relation to the electronic device 100 with reference to FIGS. 1 to 6 may also be applied to the flowchart illustrated in FIG. 7. Further, the example embodiment of a card registration will continue to be used.

According to an embodiment, in operation 710, the electronic device 100 may receive card management information from the first payment server 200. The card management information may include, for example, identification information for a financial company and a bank identification number (BIN) range managed by the financial company. The card management information may further include as indication as to whether provision of a global service, a country, and condition information is utilized for card registration. The condition information utilized for card registration may include, for example, the number of digits in a card number (PAN length), whether a card validation code (CVC or CVV) is utilized, and whether a physical address is utilized.

According to an embodiment, in operation 720, the electronic device 100 may store the card management information in memory 130. According to an embodiment, the electronic device 100 may update the card management information stored in memory 130. According to an embodiment, the electronic device 100 may request the latest version information of the card management information from the first payment server 200. According to an embodiment, the electronic device 100 may determine whether the card management information has been updated, based on the latest version information received from the first payment server 200. According to an embodiment, if the card management information is updated, the electronic device 100 may request the updated card management information from the first payment server 200. According to an embodiment, if the updated card management information is received, the electronic device 100 may store the updated card management information in the memory 130.

According to an embodiment, in operation 730, the electronic device 100 may receive card registration information. The card registration information may include, for example, a card number. The card registration information may further include at least one of, for example, the card user's name and address, a card validation code, and card expiration date.

According to an embodiment, in operation 740, the electronic device 100 may identify card management information corresponding to the card registration information. For example, the electronic device 100 may determine whether a BIN corresponding to the card number included in the card registration information exists.

According to an embodiment, if card management information corresponding to the card registration information is identified, the electronic device 100 may, in operation 750, request card registration from the first payment server 200. That is, when security information (e.g., information indicating what kinds of data should be provided for registration) corresponds to elements within received account data. According to an embodiment, if card management information corresponding to the card registration information exists, the electronic device 100 may identify a finance server corresponding to the card registration information. According to an embodiment, the electronic device 100 may request card registration destined for a finance server corresponding to the card registration information among a plurality of finance servers operating in conjunction with the first payment server 200. For example, the electronic device 100 may request card registration from a finance server corresponding to the card registration information through the first payment server 200 or directly. According to an embodiment, the electronic device 100 may transmit the card registration information together with the card registration request.

According to an embodiment, if card management information corresponding to the card registration information is not identified, the electronic device 100 may, in operation 760, request card registration from the second payment server 300. According to an embodiment, the electronic device 100 may transmit the card registration information together with the card registration request. That is, when data elements of the account data fail to correspond to the security information, registration proceeds on a different transactional server.

According to an embodiment, in operation 770, the electronic device 100 may determine whether the card registration has succeeded. According to an embodiment, the electronic device 100 may receive a card registration result from the second payment server 300. According to an embodiment, the electronic device 100 may determine whether the card registration has succeeded, based on the card registration result.

According to an embodiment, if the card registration fails, the electronic device 100 may request card registration from a payment server included in the third group. According to an embodiment, the electronic device 100 may request card registration destined for a finance server corresponding to the card registration information among a plurality of finance servers operating in conjunction with the third payment server 400. According to an embodiment, the electronic device 100 may transmit the card registration information together with the card registration request. That is, when registration of the account fails on the second transactional server, an attempt is made on a new and different third transactional server.

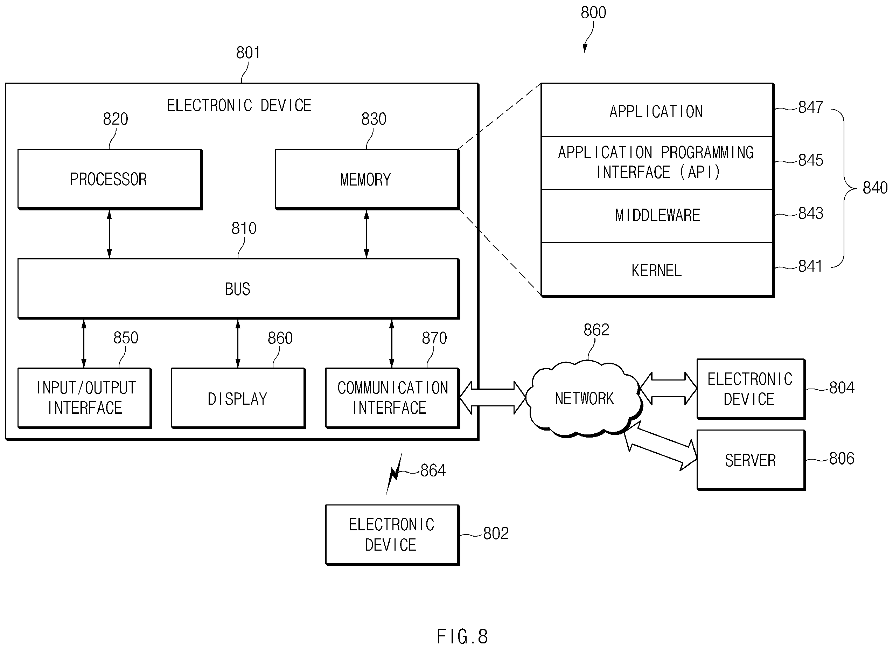

FIG. 8 illustrates an electronic device in a network environment, according to various embodiments.

Referring to FIG. 8, according to various embodiments, an electronic device 801in a network environment 800 is described. For example, the electronic device 801 may include all or a part of the electronic device 100 illustrated in FIG. 6. The electronic device 801 may include a bus 810, a processor 820, a memory 830, an input/output interface 850, a display 860, and a communication interface 870. According to an embodiment, the electronic device 801 may not include at least one of the above-described elements or may further include other element(s).

For example, the bus 810 may interconnect the above-described elements 810 to 870 and may include a circuit for conveying communications (e.g., a control message and/or data) among the above-described elements.

The processor 820 may include one or more of a central processing unit (CPU), an application processor (AP), or a communication processor (CP). For example, the processor 820 may perform an arithmetic operation or data processing associated with control and/or communication of at least other elements of the electronic device 801.

The memory 830 may include a volatile and/or nonvolatile memory. For example, the memory 830 may store instructions or data associated with at least one other element(s) of the electronic device 801. According to an embodiment, the memory 830 may store software and/or a program 840.

According to an embodiment, the memory 830 may include a main memory 831 and an auxiliary memory 833. For example, while the processor 820 executes a program, the main memory 831 may store the program itself and data processed by the program. The auxiliary memory 833 may be, for example, storage capable of supplementing limited storage capacity of the main memory 831 and may store a large amount of program (or data). According to an embodiment, in the case where the processor 820 attempts to execute a specific program (or data) stored in the auxiliary memory 833, the specific program may be loaded into the main memory 831 from the auxiliary memory 833. According to an embodiment, the main memory 831 and the auxiliary memory 833 may mutually transmit or receive data by using a direct memory access (DMA) method even without the control of the processor 820.

The program 840 may include, for example, a kernel 841, a middleware 843, an application programming interface (API) 845, and/or an application program (or "an application") 847. At least a part of the kernel 841, the middleware 843, or the API 845 may be referred to as an "operating system (OS)".

For example, the kernel 841 may control or manage system resources (e.g., the bus 810, the processor 820, the memory 830, and the like) that are used to execute operations or functions of other programs (e.g., the middleware 843, the API 845, and the application program 847). Furthermore, the kernel 841 may provide an interface that allows the middleware 843, the API 845, or the application program 847 to access discrete elements of the electronic device 801 so as to control or manage system resources.

The middleware 843 may perform, for example, a mediation role such that the API 845 or the application program 847 communicates with the kernel 841 to exchange data. Furthermore, the middleware 843 may process one or more task requests received from the application program 847 according to a priority. For example, the middleware 843 may assign the priority, which makes it possible to use a system resource (e.g., the bus 810, the processor 820, the memory 830, or the like) of the electronic device 801, to at least one of the application program 847 and may process the one or more task requests.

The API 845 may be, for example, an interface through which the application program 847 controls a function provided by the kernel 841 or the middleware 843, and may include, for example, at least one interface or function (e.g., an instruction) for a file control, a window control, image processing, a character control, or the like.

The input/output interface 850 may play a role, for example, an interface which transmits an instruction or data input from a user or another external device, to other element(s) of the electronic device 801. Furthermore, the input/output interface 850 may output an instruction or data, received from other element(s) of the electronic device 801, to a user or another external device.

The display 860 may include, for example, a liquid crystal display (LCD), a light-emitting diode (LED) display, an organic LED (OLED) display, a microelectromechanical systems (MEMS) display, or an electronic paper display. The display 860 may display, for example, various contents (e.g., a text, an image, a video, an icon, a symbol, and the like) to a user. The display 860 may include a touch screen and may receive, for example, a touch, gesture, proximity, or hovering input using an electronic pen or a part of a user's body.

For example, the communication interface 870 may establish communication between the electronic device 801 and an external device (e.g., the first external electronic device 802, the second external electronic device 804, or the server 806). For example, the communication interface 870 may be connected to the network 862 over wireless communication or wired communication to communicate with the external device (e.g., the second external electronic device 804 or the server 806).

The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the local wireless communication 864. The local wireless communication 864 may include at least one of wireless fidelity (Wi-Fi), Bluetooth, Bluetooth low energy (BLE), Zigbee, near field communication (NFC), magnetic stripe transmission (MST), a global navigation satellite system (GNSS), or the like. The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo"). Hereinafter, in this disclosure, "GPS" and "GNSS" may be interchangeably used.

The wired communication may include at least one of, for example, a universal serial bus (USB), a high definition multimedia interface (HDMI), a recommended standard-232 (RS-232), power-line communication, a plain old telephone service (POTS), or the like. The network 862 may include at least one of telecommunications networks, for example, a computer network (e.g., LAN or WAN), an Internet, or a telephone network.

Each of the first and second external electronic devices 802 and 804 may be a device of which the type is different from or the same as that of the electronic device 801. According to an embodiment, the server 806 may include a group of one or more servers. According to various embodiments, all or a portion of operations that the electronic device 801 will perform may be executed by another or plural electronic devices (e.g., the first external electronic device802, the second external electronic device 804 or the server 806). According to an embodiment, in the case where the electronic device 801 executes any function or service automatically or in response to a request, the electronic device 801 may not perform the function or the service internally, but, alternatively additionally, it may request at least a portion of a function associated with the electronic device 801 at other electronic device (e.g., the external electronic device 802 or 804 or the server 806). The other electronic device (e.g., the external electronic device 802 or 804 or the server 806) may execute the requested function or additional function and may transmit the execution result to the electronic device 801. The electronic device 801 may provide the requested function or service using the received result or may additionally process the received result to provide the requested function or service. To this end, for example, cloud computing, distributed computing, or client-server computing may be used.

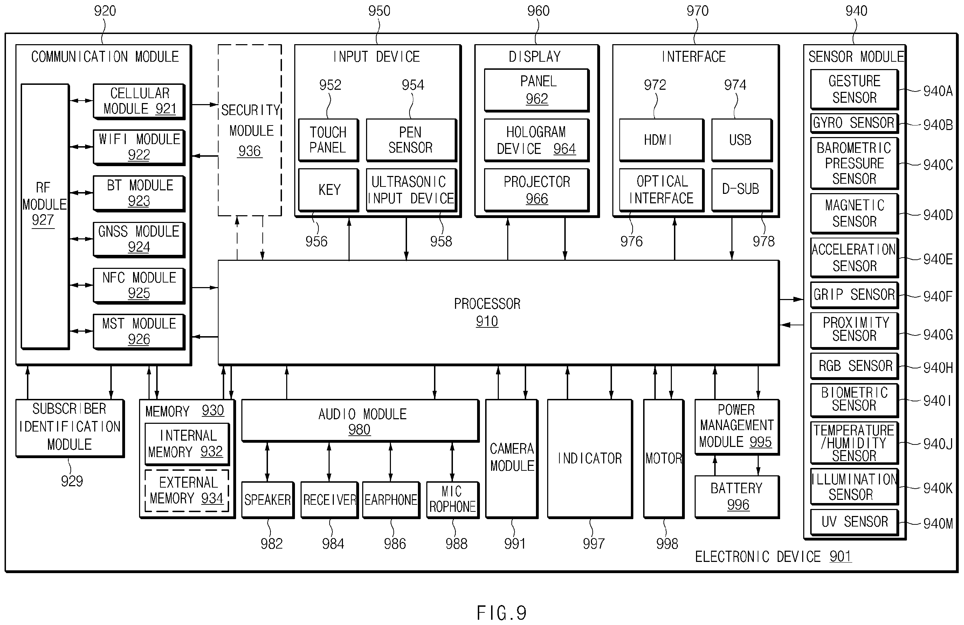

FIG. 9 illustrates a block diagram of an electronic device, according to an embodiment.

An electronic device 901 may include, for example, all or a part of the electronic device 100 illustrated in FIG. 6. The electronic device 901 may include one or more processors (e.g., an application processor (AP)) 910, a communication module 920, a subscriber identification module 929, a memory 930, a sensor module 940, an input device 950, a display 960, an interface 970, an audio module 980, a camera module 991, a power management module 995, a battery 996, an indicator 997, and a motor 998.

The processor 910 may drive, for example, an operating system (OS) or an application to control a plurality of hardware or software elements connected to the processor 910 and may process and compute a variety of data. For example, the processor 910 may be implemented with a System on Chip (SoC). According to an embodiment, the processor 910 may further include a graphic processing unit (GPU) and/or an image signal processor. The processor 910 may include at least a part (e.g., a cellular module 921) of elements illustrated in FIG. 9. The processor 910 may load an instruction or data, which is received from at least one of other elements (e.g., a nonvolatile memory), into a volatile memory and process the loaded instruction or data. The processor 910 may store a variety of data in the nonvolatile memory.

The communication module 920 may be configured the same as or similar to the communication interface 870 of FIG. 8. The communication module 920 may include the cellular module 921, a Wi-Fi module 922, a Bluetooth (BT) module 923, a GNSS module 924(e.g., a GPS module, a Glonass module, a Beidou module, or a Galileo module), a near field communication (NFC) module 925, a MST module 926and a radio frequency (RF) module 927.

The cellular module 921 may provide, for example, voice communication, video communication, a character service, an Internet service, or the like over a communication network. According to an embodiment, the cellular module 921 may perform discrimination and authentication of the electronic device 901 within a communication network by using the subscriber identification module (e.g., a SIM card) 929. According to an embodiment, the cellular module 921 may perform at least a portion of functions that the processor 910 provides. According to an embodiment, the cellular module 921 may include a communication processor (CP).

Each of the Wi-Fi module 922, the BT module 923, the GNSS module 924, the NFC module 925, or the MST module 926 may include a processor for processing data exchanged through a corresponding module, for example. According to an embodiment, at least a part (e.g., two or more) of the cellular module 921, the Wi-Fi module 922, the BT module 923, the GNSS module 924, the NFC module 925, or the MST module 926 may be included within one Integrated Circuit (IC) or an IC package.

For example, the RF module 927 may transmit and receive a communication signal (e.g., an RF signal). For example, the RF module 927 may include a transceiver, a power amplifier module (PAM), a frequency filter, a low noise amplifier (LNA), an antenna, or the like. According to another embodiment, at least one of the cellular module 921, the Wi-Fi module 922, the BT module 923, the GNSS module 924, the NFC module 925, or the MST module 926may transmit and receive an RF signal through a separate RF module.

The subscriber identification module 929 may include, for example, a card and/or embedded SIM that includes a subscriber identification module and may include unique identify information (e.g., integrated circuit card identifier (ICCID)) or subscriber information (e.g., international mobile subscriber identity (IMSI)).

The memory 930 (e.g., the memory 830) may include an internal memory 932 or an external memory 934. For example, the internal memory 932 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 934 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 934 may be operatively and/or physically connected to the electronic device 901 through various interfaces.

A security module 936 (or a security memory, which may for example correspond to the memory 160) may implement a storage space in which a data access security level is higher than that of the memory 930, guaranteeing safe data storage in a protected execution environment. The security module 936 may be implemented using a separate circuit and may include a separate processor. For example, the security module 936 may be disposed within a smart chip or a secure digital (SD) card which is removable, or may include an embedded secure element (eSE) embedded in a fixed chip of the electronic device 901. Furthermore, the security module 936 may operate based on an operating system (OS) different from the OS of the electronic device 901. For example, the security module 936 may operate based on "java card open platform" (JCOP) OS.

The sensor module 940 may measure, for example, a physical quantity or may detect an operation state of the electronic device 901. The sensor module 940 may convert the measured or detected information to an electric signal. For example, the sensor module 940may include at least one of a gesture sensor 940A, a gyro sensor 940B, a barometric pressure sensor 940C, a magnetic sensor 940D, an acceleration sensor 940E, a grip sensor 940F, the proximity sensor 940G, a color sensor 940H (e.g., red, green, blue (RGB) sensor), a biometric sensor 940I, a temperature/humidity sensor 940J, an illuminance sensor 940K, or an UV sensor 940M. Although not illustrated, additionally or alternatively, the sensor module 940 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 940 may further include a control circuit for controlling at least one or more sensors included therein. According to an embodiment, the electronic device 901 may further include a processor that is a part of the processor 910 or independent of the processor 910 and is configured to control the sensor module 940. The processor may control the sensor module 940 while the processor 910 remains at a sleep state.

The input device 950 may include, for example, a touch panel 952, a (digital) pen sensor 954, a key 956, or an ultrasonic input device 958. For example, the touch panel 952 may use at least one of capacitive, resistive, infrared and ultrasonic detecting methods. Also, the touch panel 952 may further include a control circuit. The touch panel 952 may further include a tactile layer to provide a tactile reaction to a user.

The (digital) pen sensor 954 may be, for example, a part of a touch panel or may include an additional sheet for recognition. The key 956 may include, for example, a physical button, an optical key, or a keypad. The ultrasonic input device 958 may detect (or sense) an ultrasonic signal, which is generated from an input device, through a microphone (e.g., a microphone 988) and may check data corresponding to the detected ultrasonic signal.

The display 960 may include a panel 962, a hologram device 964, or a projector 966. The panel 962 may be implemented, for example, to be flexible, transparent or wearable. The panel 962 and the touch panel 952 may be integrated into a single module. The hologram device 964 may display a stereoscopic image in a space using a light interference phenomenon. The projector 966 may project light onto a screen so as to display an image. For example, the screen may be arranged in the inside or the outside of the electronic device 901. According to an embodiment, the display 960 may further include a control circuit for controlling the panel 962, the hologram device 964, or the projector 966.

The interface 970 may include, for example, a high-definition multimedia interface (HDMI) 972, a universal serial bus (USB) 974, an optical interface 976, or a D-subminiature (D-sub) 978. The interface 970 may be included, for example, in the communication interface 870 illustrated in FIG. 8. Additionally or alternatively, the interface 970 may include, for example, a mobile high definition link (MHL) interface, a SD card/multi-media card (MMC) interface, or an infrared data association (IrDA) standard interface.

The audio module 980 may convert a sound and an electric signal in dual directions. The audio module 980 may process, for example, sound information that is input or output through a speaker 982, a receiver 984, an earphone 986, or the microphone 988.

For example, the camera module 991 may shoot a still image or a video. According to an embodiment, the camera module 991 may include at least one or more image sensors (e.g., a front sensor or a rear sensor), a lens, an image signal processor (ISP), or a flash (e.g., an LED or a xenon lamp).

The power management module 995 may manage, for example, power of the electronic device 901. According to an embodiment, a power management integrated circuit (PMIC), a charger IC, or a battery or fuel gauge may be included in the power management module 995. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, a rectifier, or the like. The battery gauge may measure, for example, a remaining capacity of the battery 996 and a voltage, current or temperature thereof while the battery is charged. The battery 996 may include, for example, a rechargeable battery and/or a solar battery.

The indicator 997 may display a specific state of the electronic device 901 or a part thereof (e.g., the processor 910), such as a booting state, a message state, a charging state, and the like. The motor 998 may convert an electrical signal into a mechanical vibration and may generate the following effects: vibration, haptic, and the like. Although not illustrated, a processing device (e.g., a GPU) for supporting a mobile TV may be included in the electronic device 901. The processing device for supporting the mobile TV may process media data according to the standards of digital multimedia broadcasting (DMB), digital video broadcasting (DVB), MediaFLO™, or the like.

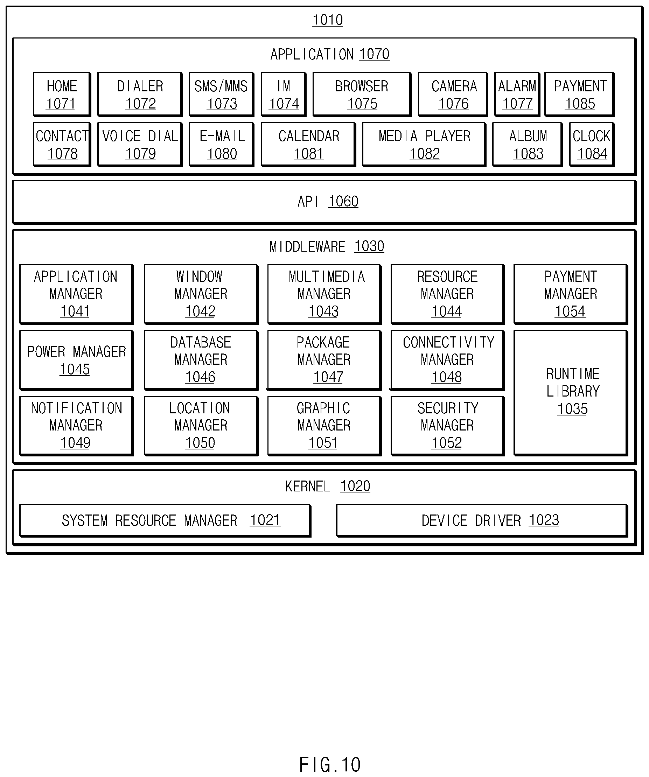

FIG. 10 illustrates a block diagram of a program module, according to various embodiments.

According to an embodiment, a program module 1010 (e.g., the program 840) may include an operating system (OS) to control resources associated with an electronic device (e.g., the electronic device 801), and/or diverse applications (e.g., the application program 847) driven on the OS. The OS may be, for example, Android, iOS, Windows, Symbian, Tizen, or Bada.

The program module 1010 may include a kernel 1020, a middleware 1030, an application programming interface (API) 1060, and/or an application 1070. At least a portion of the program module 1010 may be preloaded on an electronic device or may be downloadable from an external electronic device (e.g., the first external electronic device 802, the second external electronic device 804, or the server 806).

The kernel 1020 (e.g., the kernel 841) may include, for example, a system resource manager 1021 or a device driver 1023. The system resource manager 1021 may control, allocate, or retrieve system resources. According to an embodiment, the system resource manager 1021 may include a process managing unit, a memory managing unit, a file system managing unit, or the like. The device driver 1023 may include, for example, a display driver, a camera driver, a Bluetooth driver, a shared memory driver, a USB driver, a keypad driver, a Wi-Fi driver, an audio driver, or an inter-process communication (IPC) driver.

The middleware 1030 may provide, for example, a function that the application 1070 needs in common, or may provide diverse functions to the application 1070 through the API 1060 to allow the application 1070 to efficiently use limited system resources of the electronic device. According to an embodiment, the middleware 1030 (e.g., the middleware 843) may include at least one of a runtime library 1035, an application manager 1041, a window manager 1042, a multimedia manager 1043, a resource manager 1044, a power manager 1045, a database manager 1046, a package manager 1047, a connectivity manager 1048, a notification manager 1049, a location manager 1050, a graphic manager 1051, or a security manager 1052 and a payment manager 1054 for managing secure electronic financial payments.

The runtime library 1035 may include, for example, a library module that is used by a compiler to add a new function through a programming language while the application 1070 is being executed. The runtime library 1035 may perform input/output management, memory management, or capacities about arithmetic functions.

The application manager 1041 may manage, for example, a life cycle of at least one application of the application 1070. The window manager 1042 may manage a graphic user interface (GUI) resource that is used in a screen. The multimedia manager 1043 may identify a format utilized for playing diverse media files, and may perform encoding or decoding of media files by using a codec suitable for the format. The resource manager 1044 may manage resources such as a storage space, memory, or source code of at least one application of the application 1070.

The power manager 1045 may operate, for example, with a basic input/output system (BIOS) to manage a battery or power, and may provide power information for an operation of an electronic device. The database manager 1046 may generate, search for, or modify database that is to be used in at least one application of the application 1070. The package manager 1047 may install or update an application that is distributed in the form of package file.

The connectivity manager 1048 may manage, for example, wireless connection such as Wi-Fi or Bluetooth. The notification manager 1049 may display or notify an event such as arrival message, appointment, or proximity notification in a mode that does not disturb a user. The location manager 1050 may manage location information about an electronic device. The graphic manager 1051 may manage a graphic effect that is provided to a user, or manage a user interface relevant thereto. The security manager 1052 may provide a general security function utilized for system security, user authentication, or the like. According to an embodiment, in the case where an electronic device (e.g., the electronic device 801) includes a telephony function, the middleware 1030 may further include a telephony manager for managing a voice or video call function of the electronic device.

The middleware 1030 may include a middleware module that combines diverse functions of the above-described elements. The middleware 1030 may provide a module specialized to each OS kind to provide differentiated functions. Additionally, the middleware 1030 may dynamically remove a part of the preexisting elements or may add new elements thereto.

The API 1060 (e.g., the API 845) may be, for example, a set of programming functions and may be provided with a configuration that is variable depending on an OS. For example, in the case where an OS is the android or the iOS, it may provide one API set per platform. In the case where an OS is the Tizen, it may provide two or more API sets per platform.

The application 1070 (e.g., the application program 847) may include, for example, one or more applications capable of providing functions for a home 1071, a dialer 1072, an SMS/MMS 1073, an instant message (IM) 1074, a browser 1075, a camera 1076, an alarm 1077, a contact 1078, a voice dial 1079, an e-mail 1080, a calendar 1081, a media player 1082, an album 1083, a timepiece 1084, a payment module 1085, health care (e.g., measuring an exercise quantity, blood sugar, or the like) or offering of environment information (e.g., information of barometric pressure, humidity, temperature, or the like).

According to an embodiment, the application 1070 may include an application (hereinafter referred to as "information exchanging application" for descriptive convenience) to support information exchange between an electronic device (e.g., the electronic device 801) and an external electronic device (e.g., the first external electronic device 802 or the second external electronic device 804). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device (e.g., the first external electronic device 802 or the second external electronic device 804). Additionally, the notification relay application may receive, for example, notification information from an external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of the external electronic device(e.g., the first external electronic device 802 or the second external electronic device 804)which communicates with the electronic device, an application running in the external electronic device, or a service (e.g., a call service, a message service, or the like) provided from the external electronic device.

According to an embodiment, the application 1070 may include an application (e.g., a health care application of a mobile medical device) that is assigned in accordance with an attribute of an external electronic device (e.g., the first external electronic device 802 or the second external electronic device 804). According to an embodiment, the application 1070 may include an application that is received from an external electronic device (e.g., the first external electronic device 802, the second external electronic device 804, or the server 806). According to an embodiment, the application 1070 may include a preloaded application or a third party application that is downloadable from a server. The names of elements of the program module 1010 according to the embodiment may be modifiable depending on kinds of operating systems.

According to various embodiments, at least a portion of the program module 1010 may be implemented by software, firmware, hardware, or a combination of two or more thereof. At least a portion of the program module 1010 may be implemented (e.g., executed), for example, by the processor. At least a portion of the program module 1010 may include, for example, modules, programs, routines, sets of instructions, processes, or the like for performing one or more functions. Each of the above-mentioned elements of the electronic device according to various embodiments of the present disclosure may be configured with one or more components, and the names of the elements may be changed according to the type of the electronic device. In various embodiments, the electronic device may be implemented including at least one of the elements described in this disclosure, some elements of the electronic device may be omitted or other additional elements may be added. Furthermore, some of the elements of the electronic device may be combined with each other so as to form one entity, so that the functions of the elements may be performed in the same manner as before the combination.

The term "module" used in this disclosure may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in computer-readable storage media in the form of a program module. The instruction, when executed by a processor, may cause the one or more processors to perform a function corresponding to the instruction.

A computer-readable recording medium may include a hard disk, a floppy disk, a magnetic media (e.g., a magnetic tape), an optical media (e.g., a compact disc read only memory (CD-ROM) and a digital versatile disc (DVD), a magnetooptical media (e.g., a floptical disk)), and hardware devices (e.g., a read only memory (ROM), a random access memory (RAM), or a flash memory). Also, a program instruction may include not only a mechanical code such as things generated by a compiler but also a high-level language code executable on a computer using an interpreter. The above hardware unit may be configured to operate via one or more software modules for performing an operation of various embodiments of the present disclosure, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device, comprising:
a communication module configured to communicate with an external device;
a memory configured to store security information controlling registration of secured information, the security information indicating a plurality of data types;
an input module; and
a processor configured to:
in response to detecting a user input by the input module, retrieving account information corresponding to a user account, and
in response to detecting that data elements of the account information correspond to the plurality of data types in the security information, transmitting a request to register the user account on a first transactional server.

2. The electronic device of claim 1, wherein the processor is further configured to:
in response to detecting that the data elements of the account information do not correspond to the plurality of data types in the security information, transmitting a request to register the user account on a second transactional server different from the first transactional server.

3. The electronic device of claim 2, wherein the processor is further configured to:
in response to detecting a failure to register the user account on the second transactional server, transmitting a request to register the user account on a third transactional server.

4. The electronic device of claim 3, wherein the first transactional server is communicatively coupled to a first local account server providing the security information;
wherein the second transactional server is communicatively coupled to a second local account server that does not provide the security information; and
wherein the third transactional server is communicatively coupled to a global account server.

5. The electronic device of claim 1, wherein the plurality of data types within the security information includes identification information identifying a transactional entity, an identification number range corresponding to the transactional entity, and
wherein the account information includes a string of numbers.

6. The electronic device of claim 5, wherein the plurality of data types within the security information further include at least one of whether to provide a global service, country information, and condition information utilized for card registration.

7. The electronic device of claim 1, wherein the processor is configured to:
determine whether an update to the security information is detected;
in response to detecting the update, request the updated security information from the first transactional server using the communication module;
receive the updated security information from the first transactional server for storage in the memory.

8. The electronic device of claim 7, wherein requesting the updated security information comprises request a latest version of the security information; and
confirming that the security information has been updated by comparing the latest version of the security information and a last-stored version of the security information stored in the memory when the latest version information is received from the first transactional server.

9. A method in an electronic device, comprising:
receiving by a communication module security information for storage in a memory, the security information indicating a plurality of data types;
in response to detecting a user input by an input module, retrieving account information corresponding to a user account; and
in response to detecting that data elements of the account information correspond to the plurality of data types in the security information, transmitting a request to register the user account on a first transactional server.

10. The method of claim 9, further comprising:
in response to detecting that the data elements of the account information do not correspond to the plurality of data types in the security information, transmitting a request to register the user account on a second transactional server different from the first transactional server.

11. The method of claim 10, further comprising:
in response to detecting a failure to register the user account on the second transactional server, transmitting a request to register the user account on a third transactional server.

12. The method of claim 11, wherein the first transactional server is communicatively coupled to a first local account server providing the security information;
wherein the second transactional server is communicatively coupled to a second local account server that does not provide the security information; and
wherein the third transactional server is communicatively coupled to a global account server.

13. The method of claim 9, wherein the plurality of data types within the security information includes identification information identifying a transactional entity, an identification number range corresponding to the transactional entity, and
wherein the account information includes a string of numbers.

14. The method of claim 13, wherein the plurality of data types within the security information further include at least one of whether to provide a global service, country information, and condition information utilized for card registration.

15. The method of claim 9, further comprising:
determining whether an update to the security information is detected;
in response to detecting the update, requesting the updated security information from the first transactional server using the communication module;
receiving the updated security information from the first transactional server for storage in the memory.
